## Europäisches Patentamt

## European Patent Office

## Office européen des brevets

(11) Publication number: **0 179 762**
**B1**

# EUROPEAN PATENT SPECIFICATION

(45) Date of publication of patent specification: **22.06.88**

(21) Application number: **84902125.8**

(22) Date of filing: **30.04.84**

(86) International application number:
**PCT/US84/00654**

(87) International publication number:
**WO 85/05067 21.11.85 Gazette 85/25**

(51) Int. Cl.⁴: **B 28 B 23/02, B 29 C 39/10**

(54) **APPARATUS FOR EMBEDDING FLEXIBLE CONDUITS IN MOLDED ARTICLES.**

(43) Date of publication of application:
**07.05.86 Bulletin 86/19**

(45) Publication of the grant of the patent:
**22.06.88 Bulletin 88/25**

(84) Designated Contracting States:
**DE FR GB**

(56) References cited:
**WO-A-83/00457**
**CA-A- 545 574**
**FR-A-1 288 517**
**GB-A- 291 838**
**US-A-1 329 095**
**US-A-1 389 803**
**US-A-2 498 442**
**US-A-2 901 807**
**US-A-2 979 801**
**US-A-3 201 846**

(73) Proprietor: **UNITED TECHNOLOGIES CORPORATION**
**United Technologies Building 1, Financial Plaza
Hartford, CT 06101 (US)**

(72) Inventor: **DILLNER, James, R.**
**10 Reidy Hill Road
Hebron, CT 06231 (US)**

(74) Representative: **Schmitz, Jean-Marie et al
OFFICE DENNEMEYER S.à.r.l. P.O. Box 1502
L-1015 Luxembourg (LU)**

Courier Press, Leamington Spa, England.

## Description

The present invention concerns an apparatus for suspending a conduit within a molded product, comprising a mold for defining the shape of the molded product and a plurality of fixed rods, the lengths thereof extending from the exterior into the interior of the mold, the conduit being releasably fastened to the rods in the desired suspended position, each rod having at least one notch, the conduit resting in the notch and being held therein by a tensioned flexible member which runs along the length of the rod and which is releasably secured from the exterior end of the rod. The invention concerns also a method for suspending a conduit within a molded product in utilizing the apparatus of the present invention. The present invention involves the manufacture of molded products, particularly ceramic products having placed therein flexible conduits such as heater wires.

The present invention is related to WO—A—8 300 457. The prior publication describes how flexible wires and their surrounding conduits are held in place during the casting or molding of a contoured ceramic heater. Essentially, the wires are held in notches at the extremities of rods which extend into the mold. The rods are hollow and a cord runs along the interior of the rod to hold the wire in the notch. The prior art apparatus is suitable for holding conduit at fixed distances from a molded surface, where the rods extend transverse thereto, but it is not suitable for holding a plurality of conduits one above the other transverse to said molded surface.

The present invention is an improvement on the prior apparatus. It is suited for making a cylindrical heater where it is desired to have the wires run in a helical pattern with respect to the longitudinal axis, either near the bore or circumferential exterior surface. While there are many known means for supporting conduits and the like in place within objects being molded, very few of them are at the same time simple in construction, low in cost, and easily removable from the mold after the cast material has filled it. And it is quite desirable to remove the support means of the conduit after molding in order to obtain an entirely homogenous interior ceramic structure. In the absence of such, the conductivity of the structure will not be uniform and the resultant discontinuities can create structural flaws which may cause premature failure.

The US-A-1 389 803 discloses a method of constructing a concrete wall in utilizing rods provided with recesses on their longitudinal side, said recesses serving for maintaining horizontal reinforcing bars in position.

Thus, it is an object of the present invention that the support means be suited to precisely position conduit within a mold, where the conduits are arrayed in serial fashion along an axis. It is a further object that the support means be withdrawable after molding but before setting.

The apparatus of the present invention is characterized in that the notch is on a longitudinal side of the rod and the flexible member is an open loop which runs along the outside of the rod.

The method of the present invention is characterized by releasing the looping cord after filling the mold with material and then withdrawing the rods from the molded product.

According to the invention, wires or other flexible conduits are held in place in a mold by use of a plurality of fixed rods which extend into the mold. Each rod has one or more transverse notches along its length; the notches are suitable to receive wires. Associated with each wire in a notch is a cord which loops around the rod and presses the wire perpendicular to the rod length to hold it in place during the molding of the article. When the article is formed, as by casting a ceramic slurry, the wires are essentially captured in place and the cords can be released and withdrawn from the mold. Each rod is then rotated about its length to move the notch away from the wire, whereupon each rod can be withdrawn longitudinally from the molded article. The molded material is then caused to settle into the hole created at each rod location.

Upon hardening of the material the wires will be found to be accurately placed. Since as many notches as desired can be placed along the length of the rod, many wires can be positioned vertically close together. As such, the apparatus is particularly suited for making helical or circumferential windings in a hollow cylinder molded article.

The foregoing and other objects, features and advantages of the present invention will become more apparent from the following description of preferred embodiments and accompanying drawings.

Figure 1 shows a partial cross section of a mold usable for making a hollow cylindrical article. Rods extend into the mold to support flexible wires therein.

Figure 2 is a view of the lower end of a rod like that shown in Figure 1, showing how one of the wires is held in place with a looping cord.

Figure 3 is a more detail view of the rod and cord of Figure 2.

Figure 4 shows an alternate shape of notch.

The present invention is described in terms of the embedding of heater wires within the body of a hollow cylindrical ceramic heater which is made in a vertical open-top mold, However, it will be appreciated that the principles of the invention are usable with other configurations of molds and they will be suitable for embedding other flexible conduits within other moldable articles.

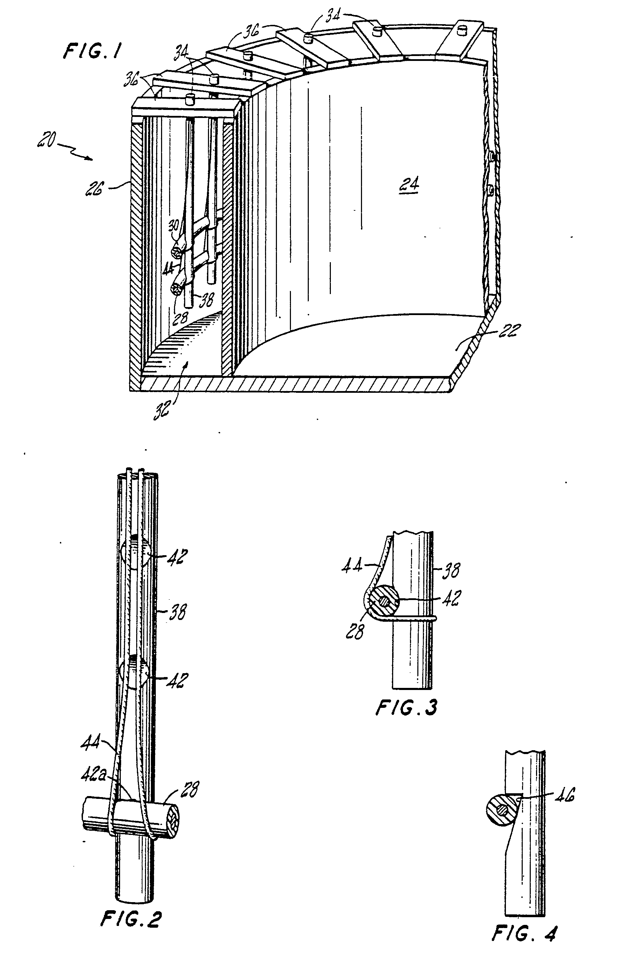

Figure 1 shows in partial sectional view a mold 20 having a bottom plate 22, an inner cylindrical wall 24 and an outer cylindrical wall 26, both attached to the plate. Two flexible insulated wire conduits 28, 30 are shown suspended within the annular space 32 of the mold, The wires 28, 30 are suspended off rods 34, one of which 38 is principally viewable at the front of the Figure. Each rod is fixed with respect to the mold by being attached to a crossbar 36 or the like.

Figures 2 and 3 show the rod 38 in detail, but holding only a single wire 28. The rod 38 has a plurality of notches 42 along its lengthwise side near the end that projects into the interior of the mold. The wire 28 rests in the lower notch 42a and it is held in place by cord 44 which makes a looping path from the upper or exterior end of the rod, down over the wire 28 and around the rear side of the strut 38; then back to the front and passing under the wire; and, then running together with the first end of the cord to the top of the rod. Both ends are pulled tight and fastened securely at the exterior end of the rod; this tends to draw the conduit into the notch. For each flexible wire conduit there is a cord, as shown in Figure 1. The cords are individually or collectively clamped at the top end of the rod, as by an elastic band.

In use, molded material which is to comprise the article, such as a ceramic slurry, is poured into the cavity 32 of the mold and essentially allowed to fill it after the wires have been secured. Vibration and other means of getting a good fill free of air bubbles are used. When the mold product material has been sufficiently settled, the cords which retain each of the wires in their respective notches are released, and by pulling on one end of the cord, the cord may be pulled along its path and out of the mold cavity. When all the cords relating to a particular rod are released, the rod can be rotated about 90 degrees or more, sufficient to disengage the notches from the wires which are essentially captured in the mold product material. This causes a slight lateral motion of the wires at each rod location into the still unhardened material. The rod can then be withdrawn vertically upward and out of the ceramic material. A slight amount of further vibration after all the rods are withdrawn causes the material to settle further and fill the cavity where each rod previously was. Since the rods are relatively small in diameter with respect to the volume of the mold interior and since they are relatively spaced apart, the subsequent filling of the cavities created by the rod withdrawals does not substantially affect the placement of the wire in the molded article.

Figure 3 shows the part-circular shape which is preferred for the notch. Figure 4 shows an angular shape notch 46 which is also usable. Other shaped notches will also be useful so long as the upwardly directed force component is resisted.

## Claims

I. Apparatus for suspending a conduit (28, 30) within a molded product, comprising a mold (20) for defining the shape of the molded product and a plurality of fixed rods (34), the lengths thereof extending from the exterior into the interior of the mold (20), the conduit (28, 30) being releasably fastened to the rods in the desired suspended position, each rod having at least one notch (42, 42a), the conduit resting in the notch (42, 42a) and being held therein by a tensioned flexible member (44) which runs along the length of the rod (34) and which is releasably secured from the exterior end of the rod (34), characterized in that the notch (42, 42a) is on a longitudinal side of the rod (34) and the flexible member (44) is an open loop which runs along the outside of the rod (34).

2. The apparatus of claim 1 characterized in that the flexible member (44) is a looping cord which extends from the exterior end of the rod (34) along the length thereof to the vicinity of the conduit (28, 30) where it passes over the conduit (28, 30) and loops around the rod (34), to then return to the exterior end of the rod (34), the loop being fastened at the exterior rod end so that the tension on the loop causes the conduit (28, 30) to be forced into the notch (42, 42a).

3. The method of suspending a conduit (28, 30) within a molded product by using the apparatus of claim 1 characterized by releasing the looping cord after filling the mold (20) with material, and then withdrawing the rods (34) from the molded product.

4. The method according to claim 3 characterized by releasing the looping cord after the mold (20) has been filled with molded product material, pulling the looping cord from the mold (20); rotating each rod (34) about its lengthwise axis so that the conduit (28, 30) is no longer contained within the notch (42, 42a) withdrawing the rod (34) along its lengthwise axis, and then causing the molded product material to fill the hole created by the withdrawal of the rod (34).

## Patentansprüche

1. Vorrichtung zum Aufhängen einer Leitung (28, 30) in einem Formprodukt, mit einer Form (20) zum Festlegen der Gestalt des Formprodukts und mit mehreren fixierten Stäben (34), deren Längen sich von außerhalb in das Innere der Form (20) erstrecken, wobei die Leitung (28, 30) an den Stäben in der gewünschten aufgehängten Position lösbar befestigt ist, wobei jeder Stab wenigstens eine Kerbe (42, 42a) hat, wobei die Leitung in der Kerbe (42, 42a) ruht und darin durch ein gespanntes flexibles Teil (44) gehalten ist, das sich über die Länge des Stabes (34) erstreckt und an dem äußeren Ende des Stabes (34) lösbar befestigt ist, dadurch gekennzeichnet, daß die Kerbe (42, 42a) auf einer Längsseite (34) des Stabes ist und das flexible Teil (44) eine offene Schlinge ist, die längs der Außenseite des Stabes (34) verläuft.

2. Vorrichtung nach Anspruch 1, dadurch gekennzeichnet, daß das flexible Teil (44) ein Schlingenbindfaden ist, der sich ab dem äußeren Ende des Stabes (34) über dessen Länge bis in die Nähe der Leitung (28, 30) erstreckt, wo er über die Leitung (28, 30) hinweggeht und um den Stab (34) geschlungen ist, um zu dem äußeren Ende des Stabes (34) zurückzukehren, wobei die Schlinge an dem äußeren Stabende befestigt ist, so daß die auf die Schlinge ausgeübte Zugspannung bewirkt, daß die Leitung (28, 30) in die Kerbe (42, 42a) gedrückt wird.

3. Verfahren zum Aufhängen einer Leitung (28, 30) in einem Formprodukt unter Verwendung der Vorrichtung nach Anspruch 1, gekennzeichnet durch Lösen des Schlingenbindfadens nach dem Füllen der Form (20) mit dem Material und anschließendes Herausziehen der Stäbe (34) aus dem Formprodukt.

4. Verfahren nach Anspruch 3, gekennzeichnet durch Lösen des Schlingenbindfadens, nachdem die Form (20) mit Formproduktmaterial gefüllt worden ist; Herausziehen des Schlingenbindfadens aus der Form (20); Drehen jedes Stabes (34) um seine Längsachse, so daß die Leitung (28, 30) nicht mehr in der Kerbe (42, 42a) enthalten ist; Herausziehen des Stabes (34) längs seiner Längsachse; und anschließend Bewirken, daß das Formproduktmaterial das Loch füllt, welches durch das Herausziehen des Stabes (34) geschaffen wird.

## Revendications

1. Appareil en vue de suspendre un conduit (28, 30) à l'intérieur d'un produit moulé, cet appareil comprenant un moule (20) en vue de définir la configuration du produit moulé, ainsi que plusieurs barres fixes (34) s'étendant sur leur longueur depuis l'extérieur jusqu'à l'intérieur du moule (20). le conduit (28, 30) étant fixé de manière amovible à ces barres dans la position suspendue désirée, chaque barre comportant au moins une encoche (42, 42a), le conduit venant prendre appui dans cette encoche (42, 42a), tout en y étant maintenu par un organe flexible tendu (44) s'étendant le long de la barre (44) et fixé de manière amovible à partir de l'extrémité extérieure de cette barre (34), caractérisé en ce que l'encoche (42, 42a) est pratiquée sur un côté longitudinal de la barre (34), tandis que l'organe flexible (44) décrit une boucle ouverte s'étendant sur la face extérieure de la barre (34).

2. Appareil selon la revendication 1, caractérisé en ce que l'organe flexible (44) est un cordon décrivant une boucle et s'étendant depuis l'extrémité extérieure de la barre (34) le long de cette dernière jusqu'au voisinage du conduit (28, 30) où il passe par-dessus ce conduit (28, 30) en décrivant une boucle autour de la barre (34), pour revenir ensuite à l'extrémité extérieure de cette dernière, cette boucle étant fixée à l'extrémité extérieure de la barre de telle sorte que la tension exercée sur la boucle ait pour effet d'enfoncer le conduit (28, 30) dans l'encoche (42, 42a).

3. Procédé en vue de suspendre un conduit (28, 30) à l'intérieur d'un produit moulé en utilisant l'appareil selon la revendication 1, caractérisé en ce qu'on libère le cordon décrivant une boucle lorsque le moule (20) a été rempli d'une matière, les barres (34) étant ensuite retirées du produit moulé.

4. Procédé selon la revendication 3, caractérisé en ce qu'on libère le cordon décrivant une boucle lorsque le moule (20) a été rempli de matières pour un produit moulé, on retire le cordon décrivant une boucle hors du moule (20), on fait tourner chaque barre (34) sur son axe longitudinal de telle sorte que le conduit (28, 30) ne soit plus emprisonné dans l'encoche (42, 42a). on retire la barre (34) le long de son axe longitudinal, puis on amène la matière pour le produit moulé à remplir le trou ménagé par le retrait de la barre (34).

FIG. 1

FIG. 2

FIG. 3

FIG. 4

1